# EUROPÄISCHE PATENTSCHRIFT

(11) **EP 2 638 255 B1**
(45) Veröffentlichungstag und Bekanntmachung des Hinweises auf die Patenterteilung: **23.03.2016**
(21) Anmeldenummer: 11752211.0
(22) Anmeldetag: 02.09.2011
(51) Int. Cl.: F01L 1/344, F16F 1/12

(54) **NOCKENWELLENVERSTELLER FÜR EINE BRENNKRAFTMASCHINE**
CAMSHAFT PHASE ADJUSTER FOR AN INTERNAL COMBUSTION ENGINE
DÉPHASEUR D'ARBRE A CAMES POUR MOTEUR A COMBUSTION INTERNE

(30) Priorität: 11.11.2010 DE 102010051052
(43) Veröffentlichungstag der Anmeldung: 18.09.2013
(73) Patentinhaber: Schaeffler Technologies AG & Co. KG, 91074 Herzogenaurach (DE)
(72) Erfinder: BOESE, Olaf, 90425 Nürnberg (DE)
(86) Internationale Anmeldenummer: PCT/EP2011/065161
(87) Internationale Veröffentlichungsnummer: WO 2012/062495

(56) Entgegenhaltungen:
- EP-A1- 2 166 199
- DE-A1-102009 005 114
- JP-A- 2000 161 027
- JP-A- 2003 120 229
- US-A- 5 149 027
- US-A1- 2005 252 468
- US-A1- 2010 199 937

## Beschreibung

### Gebiet der Erfindung

Die Erfindung betrifft einen Nockenwellenversteller für eine Brennkraftmaschine, umfassend einen drehfest mit einer Kurbelwelle verbindbaren Stator, einen in dem Stator um eine Drehachse drehbar gelagerten Rotor, einen Dichtdeckel zur Leckageminimierung, sowie ein Federelement zur Positionierung des Rotors gegenüber dem Stator.

### Hintergrund der Erfindung

Ein Nockenwellenversteller dient der gezielten Verstellung der Phasenlage zwischen einer Nockenwelle und einer Kurbelwelle in einer Brennkraftmaschine und ermöglicht so die optimierte Einstellung der Ventilsteuerzeiten über die Motorlast und die Motordrehzahl. Damit kann eine deutliche Absenkung des Kraftstoffverbrauchs und der Abgasemissionen sowie eine Leistungssteigerung des Motors erreicht werden.

Ein Nockenwellenversteller besteht üblicherweise aus einem Stator, einem in dem Stator positionierten Rotor, sowie aus zwei Dichtdeckeln. Zur Verrieglung des Rotors ist einer der Dichtdeckel häufig als ein Verriegelungsdeckel mit einer entsprechenden Verriegelungskulisse ausgebildet.

Der Stator ist im eingebauten Zustand drehfest mit einer Kurbelwelle verbunden, wohingegen der Rotor drehfest mit einer Nockenwelle verbunden ist. Der Stator ist mit einer Anzahl von Druckkammern ausgebildet, die durch sich radial nach innen von der Statorwandung weg erstreckende Stege gebildet werden. Der innerhalb des Stators gehaltene Rotor ist mit seinen Rotorflügeln in diesen positioniert. Der Verdrehwinkel des Rotors ist hierbei durch die Stege im Stator begrenzt.

Zur Nockenwellenverstellung können die Druckkammern mit Hydraulikmedium beaufschlagt werden und so den Rotor innerhalb des Stators drehen. Durch das Verdrehen des Rotors gegenüber dem Stator kann die Phasenlage der Nockenwelle geändert und damit die Öffnungszeiten der Ventile in einer Brennkraftmaschine gesteuert werden.

Um einen Rotor im Betrieb eines Nockenwellenverstellers wieder zurück in eine Ruhe- oder Ausgangsstellung zu verschieben, finden häufig Federelemente Anwendung. Derartige Federelemente sind typischerweise so ausgebildet, dass sie die Drehung des Rotors relativ zum Stator ermöglichen, so dass der Rotor innerhalb des Stator in die gewünschte Position verschoben werden kann. Um eine solche Drehung zu gewährleisten, ist eine sichere Befestigung des Federelements erforderlich.

Hierzu ist aus der DE 10 2009 005 114 A1 ein Nockenwellenversteller der eingangs genannten Art mit einem als Drehfeder ausgebildeten Federelement bekannt. Die Drehfeder ist über ihre beiden Federenden an hierfür vorgesehenen Federhaltern befestigt und zwischen einer sogenannten Federabdeckscheibe und dem als vordere Abdeckscheibe ausgebildeten Dichtdeckel angeordnet. Die Federabdeckscheibe ist über Bolzen mit dem Dichtdeckel verbunden.

Weiter ist aus der DE 10 2008 051 732 A1 eine Vorrichtung zur variablen Einstellung der Steuerzeiten von Gaswechselventilen einer Brennkraftmaschine mit einem als Drehfeder ausgebildeten Federelement bekannt. Die Drehfeder ist in einem Federraum angeordnet und über ihre beiden Federenden an einem als Seitendeckel ausgebildeten Dichtdeckel befestigt. Der Federraum wird von einem topfförmigen Federdeckel begrenzt, wozu der Federdeckel die Vorrichtung radial und axial zumindest teilweise übergreift. Der Federdeckel und der Dichtdeckel sind gemäß der DE 10 2008 051 732 A1 über Formschlusselemente aneinander befestigt.

Beide der vorgenannten Ausgestaltungen ermöglichen einen sicheren Halt der Drehfeder am Dichtdeckel. Allerdings stellen der Einsatz von Federabdeckscheiben bzw. Federdeckeln aufgrund ihres Gewichts und die mit der Fertigung der verbundenen Kosten keine dauerhafte Lösung zur Positionierung eines Federelements an einem Dichtdeckel dar.

### Aufgabe der Erfindung

Es ist demnach eine Aufgabe der Erfindung, einen Nockenwellenversteller anzugeben, der eine gegenüber dem Stand der Technik zumindest kostenneutrale und gewichtsreduzierte Möglichkeit zur zuverlässigen Positionierung des Rotors gegenüber dem Stator bietet.

### Lösung der Aufgabe

Die Aufgabe der Erfindung wird erfindungsgemäß gelöst durch einen Nockenwellenversteller für eine Brennkraftmaschine, umfassend einen drehfest mit einer Kurbelwelle verbindbaren Stator, einen in dem Stator um eine Drehachse drehbar gelagerten Rotor, einen Dichtdeckel zur Leckageminimierung, sowie ein Federelement zur Positionierung des Rotors gegenüber dem Stator. Hierbei ist das Federelement über einen Federbügel in axialer Richtung am Dichtdeckel gehalten.

Die Erfindung berücksichtigt, dass die sichere Positionierung eines Federelements zur Gewährleistung der Funktion eines Nockenwellenverstellers zwingend erforderlich ist. Hierbei kann durch die Verwendung gängiger Federdeckel die benötigte axiale Bauraumbegrenzung erreicht werden. Da Federdeckel jedoch üblicherweise als massive Bauteile gefertigt sind, kann den stetig steigenden Anforderungen an das Gewicht und die Herstellungskosten von Nockenwellenverstellern, insbesondere im Hinblick auf die Kostenminimierung bei deren Produktion und Montage, nur bedingt Rechnung getragen werden.

Die Erfindung erkennt, dass die vorgenannte Problematik überwunden werden kann, wenn statt der Verwendung eines Federdeckels bzw. einer Federabdeckplatte ein Federbügel eingesetzt wird, der das Federelement in axialer Richtung am Dichtdeckel hält. Durch eine derartige Festlegung des Federelements kann eine axiale Bauraumbegrenzung erreicht werden, der das Federelement in axialer Richtung am Dichtdeckel hält. Der Federbügel verhindert hierbei ein axiales Aufschwingen des Federelements und ein damit eventuell verbundenes Abspringen vom Dichtdeckel bei zu starker axialer Bewegung im Betrieb eines Nockenwellenverstellers.

Aufgrund der Verwendung eines Federbügels kann auf massive und aufwändig zu fertigende Federdeckel verzichtet werden. Dank der weitaus geringeren Größe eines Federbügels gegenüber den gängigen Federdeckeln kann weiterhin die Massenträgheit des Nockenwellenverstellers und damit die zu dessen Betätigung notwendigen Antriebskräfte verringert werden.

Mit anderen Worten bietet der Einsatz eines Federbügel eine kostenneutrale und gewichtsreduzierte Möglichkeit, ein Federelement zuverlässig in der vorgesehenen Position an einem Dichtdeckel zu halten.

Der eingesetzte Federbügel ist vorzugsweise mit einem Grundkörper und einer Anzahl von an diesem angeordneten Schenkeln ausgebildet sein. Der Federbügel ist hierbei vorzugsweise einteilig gefertigt. Weiterhin sind die Größe des Federbügels und die Abmessungen des eingesetzten Federelements zweckmäßigerweise aufeinander abgestimmt. Der Federbügel kann je nach Einsatzgebiet beispielsweise aus einem metallischen Werkstoff oder aus einem Kunststoff gefertigt sein.

Grundsätzlich ist auch der Einsatz einer Mehrzahl von Federbügeln möglich, wobei die eingesetzte Anzahl insbesondere anhängig von der Größe des Federelements und den im Betrieb des Nockenwellenverstellers wirkenden Kräften ist.

Der Nockenwellenversteller umfasst, wie eingangs bereits erläutert, einen Stator und einen in diesem gehaltenen Rotor. Die Dimensionierung der Bauteile hängt hierbei von der Größe der zu betätigenden Nockenwelle ab. Die Druckkammern innerhalb des Stators können zur Ansteuerung des Rotors mit Hydraulikflüssigkeit beaufschlagt werden. Der Verdrehwinkel des Rotors ist hierbei insbesondere abhängig von der Größe der Druckkammer ebenso wie von der Breite der Flügel, bzw. vom Verhältnis der beiden zueinander.

Die Stege des Stators können mit Flügelanschlagsflächen ausgebildet sein, an denen die Rotorflügel anschlagen können. Es besteht die Möglichkeit, einen oder auch mehrere Stege des Stators mit Flügelanschlagsflächen auszugestalten. Die weiteren Stege des Stators, deren Wände nicht als Flügelanschlagsflächen ausgebildet sind, dienen dann insbesondere der Begrenzung der Druckkammern.

Mit dem Stator ist üblicherweise ein Dichtdeckel verbunden, der die Druckkammern bzw. den Innenraum des Nockenwellenverstellers seitlich begrenzt. Der Dichtdeckel kann beispielsweise als ein Verriegelungsdeckel ausgebildet sein, in dem eine Kulisse zur drehfesten Verriegelung des Rotors eingebracht ist. Die Kulisse ist zweckmäßigerweise innerhalb einer der Druckkammern in Form einer Ausnehmung ausgebildet, in die ein Kolben zur Verriegelung greifen kann. Die Position zur Verrieglung wird hierbei durch das eingesetzte Federelement erreicht, welches so ausgebildet ist, dass es den Rotor relativ zum Stator dreht und so in die gewünschte Position bringt. Alternativ ist auch eine Ausgestaltung denkbar, bei welcher der Innenraum des Nockenwellenverstellers beidseitig durch jeweils einen Dichtdeckel seitlich begrenzt ist.

Dementsprechend kann das Federelement, je nach Ausbildung des Nockenwellenverstellers und abhängig von der Wahl der eingesetzten Deckel, über den Federbügel entweder an einem Dichtdeckel oder an einem Verriegelungsdeckel gehalten werden.

Weiterhin ist es grundsätzlich auch möglich, dass das Federelement an einem Dichtdeckel gehalten wird, der Teil einer Stator-Deckel-Einheit ist. Eine Stator-Deckel-Einheit bzw. ein sogenannter Statortopf ist vorzugsweise einteilig, beispielsweise mittels eines Sinterverfahrens, gefertigt. Bei einer derartigen Ausgestaltung können beispielsweise der Herstellungsprozess des Nockenwellenverstellers verkürzt und die Kosten gesenkt werden.

In einer vorteilhaften Ausgestaltung der Erfindung ist der Federbügel radial am Dichtdeckel ausgerichtet und weist zur Befestigung sich axial erstreckende Schenkel auf. Der Federbügel weist hierzu zweckmäßigerweise einen Grundkörper auf, an dem die Schenkel angeordnet sind. Der Grundkörper legt die axiale räumlich Ausdehnung des Federelements fest, während die Schenkel, die zur Befestigung am Dichtdeckel dienen, die Ausdehnung des Federelements zusätzlich in radialer Richtung begrenzen. Dementsprechend kann durch die Ausgestaltung des Federbügels die Bewegungsfreiheit des Federelements in den geforderten Grenzen eingestellt werden. Die Anzahl der Schenkel, ebenso wie die Größe des Grundkörpers des Federelements sind hierbei in Abhängigkeit der Maße des Nockenwellenverstellers wählbar.

In einer weiter vorteilhaften Ausgestaltung der Erfindung ist der Dichtdeckel mit einer Anzahl von Ausnehmungen zur Befestigung des Federbügels ausgebildet. Die Befestigung kann hierbei beispielsweise über einen Kraftschluss oder einen Formschluss zwischen dem Dichtdeckel und dem Federbügel erfolgen. Die oder jede in den Dichtdeckel eingebrachte Ausnehmung kann unterschiedliche Formen aufweisen. Beispielsweise kann eine Ausnehmung in Form einer gleichmäßig durchgängigen Bohrung, beispielsweise als ein sogenanntes Langloch, ausgebildet sein. Bei einer solchen Ausgestaltung können der oder die Schenkel des Federbügels gemeinsam in der Ausnehmung befestigt werden.

Alternativ oder zusätzlich können mehrere Ausnehmungen in den Dichtdeckel eingebracht sein, die jeweils zur Aufnahme des Federbügels zur Verfügung stehen. Insbesondere ist hierbei eine abgesetzte, hinterschnittene Bohrung denkbar. Durch einen Hinterschnitt kann eine formschlüssige Verbindung zwischen Federbügel und Dichtdeckel erreicht werden.

Die oder jede Ausnehmung ist weiterhin insbesondere im Dichtdeckel außerhalb des Bereiches der Druckkammern eingebracht, so dass eine externe Leckage des Nockenwellenverstellers, also ein Austritt von Hydraulikflüssigkeit aus den Druckkammern, verhindert wird.

Vorzugsweise sind die Schenkel des Federbügels in den Ausnehmungen des Dichtdeckels verrastet. Durch Rastverbindungen können bei geringem Montageaufwand sichere und zuverlässige Bauteilverbindungen hergestellt werden. Hierzu sind die Schenkel des Federbügels an ihren Stirnseiten vorzugsweise mit Rastelementen, wie beispielsweise Rastnasen ausgebildet, die in der oder jeder Ausnehmung des Dichtdeckels verrasten können. Die Ausnehmungen sind hierzu insbesondere mit einer Abkantung ausgebildet, die das Verrasten nach dem Einschieben der Schenkel in die Ausnehmungen ermöglicht. Die Abkantung dient im montierten Zustand als axiale Anlagefläche für die entsprechend ausgebildeten Schenkel des Federbügels.

In einer weiter vorteilhaften Ausgestaltung sind die Schenkel des Federbügels in der oder jeder Ausnehmung des Dichtdeckels verspannt. Zur Montage können die Schenkel des Federbügels zusammengedrückt werden und auf diese Weise vorgespannt werden. Der Abstand der Schenkelenden entspricht dann im Wesentlichen dem Abstand der zur Befestigung vorgesehenen Ausnehmungen zueinander bzw., im Falle einer einzelnen Ausnehmung in Form eines Langlochs, dem Abstand der das Langloch begrenzenden Seiten. Nach dem Einschieben des Federbügels in die oder jede Ausnehmung können die Schenkel des Federbügels sich entsprechend der wirkenden Rückstellkraft wieder entspannen und sind so in der oder jeder Ausnehmung verspannt.

Sowohl ein Verrasten als auch ein Verspannen ermöglicht hierbei grundsätzlich ein nachträgliches Lösen der Verbindung zwischen Federbügel und Dichtdeckel, beispielsweise Falle von Reparaturen oder einem notwendigen Austausch eines Bauteils.

Alternativ zu den vorgenannten Möglichkeiten sind weiterhin grundsätzlich alle Verbindungen möglich, die eine sichere Befestigung des Federelements am Dichtdeckel gewährleisten und die benötigte axiale Bauraumbegrenzung des Federelements sicherstellen. Beispielsweise ist auch eine Presspassung denkbar, wobei der Querschnitt der Schenkel geringfügig größer ist, als der Durchmesser der zur Befestigung vorgesehen Ausnehmungen. Die Schenkel können hierbei durch die Aufwendung von Druck in die Ausnehmungen gepresst und so sicher mit dem Dichtdeckel verbunden werden.

Besonders bevorzugt ist das Federelement als eine Spiralfeder ausgebildet, deren Windungen zumindest teilweise von dem Federbügel umgriffen werden. Spiralfedern finden häufig Anwendung, da sie in der Lage sind, einer großen Anzahl von Lastzyklen mit einem hohen Vordrehmoment zu widerstehen. Die Größe der Spiralfeder bzw. die Anzahl ihrer Windungen ist insbesondere auf die zur Verfügung stehende Fläche am Dichtdeckel des Nockenwellenverstellers abgestimmt. Die Anzahl der umgriffenen Windungen kann hierbei in Abhängigkeit der Größe des Federbügels und dessen Positionierung am Dichtdeckel unterschiedlich sein. Durch das Umgreifen mittels des Federbügels wird die Spiralfeder sowohl in axialer Richtung als auch radial am Dichtdeckel festgelegt.

Die verwendeten Federn sind vorliegend selbstverständlich nicht nur auf Spiralfedern beschränkt. Auch andere Federn, die ein Verdrehen des Rotors innerhalb des Stators ermöglichen, können grundsätzlich Anwendung finden. Zweckmäßigerweise ist das Federelement zusätzlich mittels eines Federhalters radial am Dichtdeckel gehalten. Hierzu ist das äußere Federende des Federelements bevorzugt mittels eines Stiftes am Dichtdeckel befestigt. Die in diesem Federende auslaufende Windung des Federelementes wird über einen weiteren Stift geführt und so über den Federhalter in radialer Richtung zusätzlich gesichert.

### Kurze Beschreibung der Zeichnung

Im Folgenden werden Ausführungsbeispiele der Erfindung anhand einer Zeichnung näher erläutert. Dabei zeigen:
- Fig. 1: einen Nockenwellenversteller mit einem Federbügel in einer dreidimensionalen Darstellung,
- Fig. 2: den Nockenwellenversteller gemäß Fig. 1 in einer Draufsicht,
- Fig. 3: einen Federbügel in einer dreidimensionalen Darstellung, sowie
- Fig. 4: einen Ausschnitt eines weiteren Nockenwellenverstellers mit einem Federbügel gemäß Fig. 3 in einem Längsschnitt.

### Ausführliche Beschreibung der Zeichnung

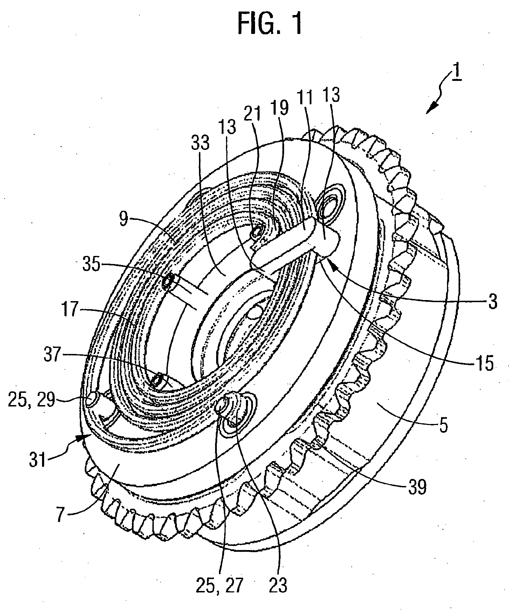

In Fig. 1 ist ein Nockenwellenversteller 1 für eine Brennkraftmaschine mit einem Federbügel 3 in einer dreidimensionalen Darstellung gezeigt. Der Nockenwellenversteller 1 umfasst einen drehfest mit einer Kurbelwelle verbindbaren Stator 5 sowie einen in dem Stator 5 um eine Drehachse drehbar gelagerten Rotor. Der Rotor ist aufgrund der montierten Darstellung nicht zu sehen. Der innerhalb des Stators 5 gelagerte Rotor ist durch einen Dichtdeckel 7 gegen Leckagen abgedichtet.

An dem Dichtdeckel 7 ist ein als Spiralfeder ausgebildetes Federelement 9 über den Federbügel 3 in axialer Richtung gehalten. Der Federbügel 3 ist radial am Dichtdeckel 7 ausgerichtet und umgreift die Spiralfeder 9. Hierzu ist der Federbügel 3 mit einem Grundkörper 11 ausgebildet, an welchem zwei sich axial erstreckende Schenkel 13 angeordnet sind. Der Grundkörper 11 legt hierbei die axiale räumliche Ausdehnung der Spiralfeder 9 fest, während die Schenkel 13 über die Befestigung am Dichtdeckel 7 die Ausdehnung der Spiralfeder zusätzlich in radialer Richtung begrenzen.

Der Dichtdeckel 7 weist zur Aufnahme der Schenkel 13 eine als Langloch ausgebildete Ausnehmung 15 auf. Die Ausnehmung 15 ist außerhalb des Bereiches der Druckkammern des Stators 5 eingebracht, so dass eine externe Leckage verhindert wird. Über die Ausnehmung 15 sind die Schenkel 13 des Federbügels 3 in der Ausnehmung 15 des Dichtdeckels 7 verspannt. Die Schenkel 13 des Federbügels 3 sind entsprechend vor der Montage vorgespannt und werden dann kraftschlüssig mit dem Dichtdeckel 7 verbunden.

Bei der Montage werden die Schenkel 13 zusammengedrückt, so dass der Abstand ihrer Schenkelenden im Wesentlichen dem Abstand der die Ausnehmung 15 begrenzenden Seiten entspricht. Nach dem Einschieben der Schenkel 13 in die Ausnehmung 15 entspannen sich diese wieder und sind in der Ausnehmung 15 verspannt.

Die Spiralfeder 9 weist eine Anzahl von Windungen 17 auf, die von dem Federbügel 3 umgriffen werden. Um eine sichere Befestigung der Spiralfeder 9 zu ermöglichen, umgreift diese zum einen mit ihrem inneren Federende 19 einen als sich axial erstreckenden Stift ausgebildeten Federhalter 21. Das äußere Federende 23 der Spiralfeder steht im Eingriff mit einem weiteren Federhalter 25. Durch diesen Federhalter 25 ist die Spiralfeder 9 zusätzlich am Dichtdeckel 7 gehalten. Der Federhalter 25 besteht aus zwei Stiften 27, 29, wobei der erste Stift 27 wird von dem äußeren Federende 23 der Spiralfeder 9 umgriffen wird. Die in dem Federende 23 auslaufende Windung 31 wird außen, also am Auβenumfang des Dichtdeckels 7, teilweise um den zweiten Stift 29 herum geführt und so in radialer Richtung gesichert.

Zusätzlich zum Federhalter 25 sind am Innenumfang 33 des Dichtdeckels 7 zwei weitere Stifte 35, 37 angeordnet, die ebenfalls eine radiale Sicherung der Spiralfeder 9 ermöglichen.

Weiterhin ist das außenverzahnte Kettenrad 39 zu sehen, über welches der Nockenwellenversteller 1 im eingebauten Zustand durch einen Kettenantrieb mit der Kurbelwelle einer Brennkraftmaschine verbunden werden kann. Zur Befestigung der Spiralfeder 9

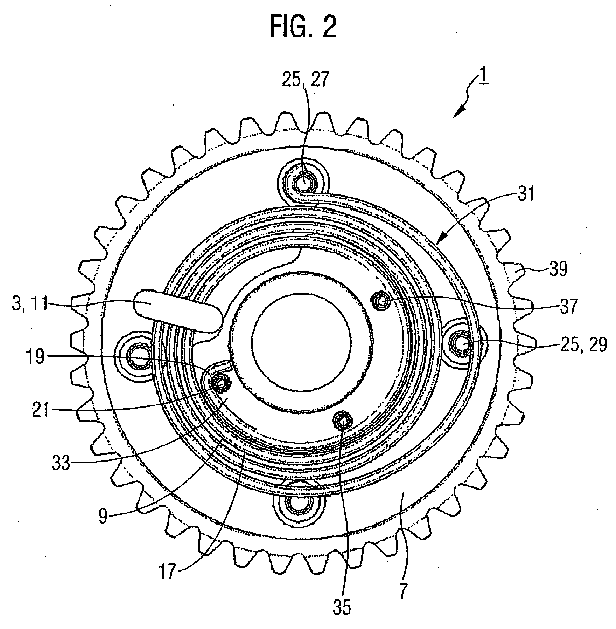

Fig. 2 zeigt den Nockenwellenversteller 1 gemäß Fig. 1 in einer Draufsicht. Da der Nockenwellenversteller in Fig. 1 bereits detailliert beschrieben ist, wird an dieser Stelle hierauf verwiesen.

Der Nockenwellenversteller 1 hat den Federbügel 3, der zur Festlegung der Spiralfeder am Dichtdeckel 7 dient. Man erkennt, dass der Federbügel 3 die Windungen 17 der Spiralfeder 9 umgreift. Der Grundkörper 11 des Federbügels 3 legt hierbei die axiale räumlich Ausdehnung der Spiralfeder 9 fest. Die Schenkel 13 begrenzen weiterhin die räumliche Ausdehnung der Spiralfeder 9 in radialer Richtung. Dementsprechend kann durch die Abmessungen des Federbügels 3 die Bewegungsfreiheit eingestellt und insbesondere auch beschränkt werden.

Weiterhin ist in Fig. 2 die Befestigung der Spiralfeder 9 am Nockenwellenversteller 1 bzw. am Dichtdeckel 7 über ihre jeweiligen Federenden 19, 23 deutlich zu erkennen. Beide Federenden sind über Stifte 19, 23 sind mittels Stiften 21, 27 am Dichtdeckel 7 gehalten.

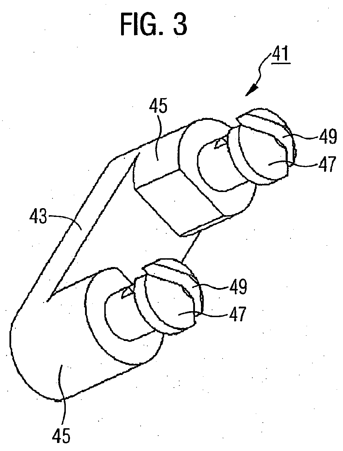

In Fig. 3 ist ein Federbügel 41 zur Festlegung eines Federelements an einem Dichtdeckel in einer dreidimensionalen Darstellung gezeigt. Der Federbügel 41 ist aus einem metallischen Werkstoff gefertigt. Er hat einen Grundkörper 43 und zwei sich von diesem weg erstreckende zueinander parallele Schenkel 45. Die Schenkel 45 sind an ihren jeweiligen Enden mit Rastelementen 47 ausgebildet.

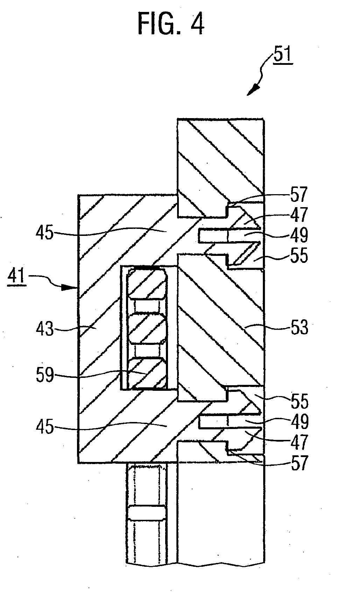

Die Rastelemente 47 sind jeweils mit einer Spalte 49 ausgebildet, der es ermöglich, die Rastelemente 47 bei der Einbringung in Ausnehmungen eines Dichtdeckels unter Verringerung der Spaltenmaße zusammenzudrücken. Wenn die Schenkel 45 in den Ausnehmungen positioniert sind, nehmen die Rastelemente 47 wieder ihre ursprüngliche Form ein und verrasten innerhalb der Ausnehmung. Hierbei vergrößert sich das Maß der Spalten 49 wieder auf die ursprüngliche Größe. Die Befestigung des Federbügels 41 am Dichtdeckel über die Rastelemente 47 ist in der montierten Darstellung in Fig. 4 gezeigt.

Fig. 4 zeigt einen Ausschnitt eines Nockenwellenverstellers 51 mit einem Federbügel 41 gemäß Fig. 3 mit einem Dichtdeckel und dem an diesem befestigten Federbügel 41. Aufgrund der nur teilweisen Darstellung sind die weiteren Bauteile des Nockenwellenverstellers 51 nicht zu sehen.

Im Unterschied zu den Fig. 1 und 2 ist der Federbügel 41 vorliegend mit dem Dichtdeckel 53 verrastet. Durch Rastverbindungen können bei geringem Montageaufwand sichere und zuverlässige Bauteilverbindungen hergestellt werden. Man erkennt deutlich die Rastelemente 47 an den Stirnseiten der Schenkel, die in jeweils einer Ausnehmung 55 des Dichtdeckels 53 verrastet sind. Die Ausnehmungen 55 sind hierbei hinterschnitten mit einer Abkantung 57 ausgebildet. Die Abkantung 57 dient als axiale Anlagefläche für die Rastelemente 47 und verhindert ein unerwünschtes Lösen der Verbindung verhindert.

Das als Spiralfeder ausgebildete Federelement 59 wird von dem Federbügel 41 umgriffen und ist so in axialer Richtung am Dichtdeckel 53 festgelegt.

### Liste der Bezugszahlen

- 1: Nockenwellenversteller
- 3: Federbügel
- 5: Stator
- 7: Dichtdeckel
- 9: Federelement
- 11: Grundkörper
- 13: Schenkel
- 15: Ausnehmung
- 17: Windung
- 19: inneres Federende
- 21: Federhalter
- 23: äußeres Federende
- 25: Federhalter
- 27: Stift
- 29: Stift
- 31: Windung
- 33: Innenumfang
- 35: Stift
- 37: Stift
- 39: Außenverzahnung
- 41: Federbügel
- 43: Grundkörper
- 45: Schenkel
- 47: Rastelemente
- 49: Spalte
- 51: Nockenwellenversteller
- 53: Dichtdeckel
- 55: Ausnehmung
- 57: Abkantung
- 59: Federelement

## Patentansprüche

1. Nockenwellenversteller (1, 51) für eine Brennkraftmaschine, umfassend einen drehfest mit einer Kurbelwelle verbindbaren Stator (5), einen in dem Stator (5) um eine Drehachse drehbar gelagerten Rotor, einen Dichtdeckel (7, 53) zur Leckageminimierung, sowie ein Federelement (9, 59) zur Positionierung des Rotors gegenüber dem Stator (5),
dadurch gegenzeichnet, dass das Federelement (9, 59) über einen Federbügel (3, 41) in axialer Richtung am Dichtdeckel (7, 53) gehalten ist.

2. Nockenwellenversteller (1, 51) nach Anspruch 1,
dadurch gegenzeichnet, dass der Federbügel (3, 41) radial am Dichtdeckel (7, 53) ausgerichtet ist und zur Befestigung sich axial erstreckende Schenkel (13, 45) aufweist.

3. Nockenwellenversteller (1,51) nach Anspruch 1 oder 2,
dadurch gegenzeichnet, dass der Dichtdeckel (7, 53) mit einer Anzahl von Ausnehmungen (15, 57) zur Befestigung des Federbügels (3, 41) ausgebildet ist.

4. Nockenwellenversteller (1, 51) nach Anspruch 2 oder 3,
dadurch gegenzeichnet, dass die Schenkel (13, 45) des Federbügels (3, 41) in der oder jeder Ausnehmung (15, 57) des Dichtdeckels (7, 53) verrastet sind.

5. Nockenwellenversteller (1, 51) nach Anspruch 2 oder 3,
dadurch gegenzeichnet, dass die Schenkel (13, 45) des Federbügels (3, 41) in der oder jeder Ausnehmung (15, 57) des Dichtdeckels (7, 53) verspannt sind.

6. Nockenwellenversteller (1, 51) nach einem der vorhergehenden Ansprüche,
dadurch gegenzeichnet, dass das Federelement (9, 59) als eine Spiralfeder ausgebildet ist, deren Windungen (17) zumindest teilweise von dem Federbügel (3, 41) umgriffen werden.

7. Nockenwellenversteller (1, 51) nach einem der vorhergehenden Ansprüche,
dadurch gegenzeichnet, dass das Federelement (9, 59) zusätzlich mittels eines Federhalters (25) radial am Dichtdeckel (7, 53) gehalten ist.

## Claims

1. Camshaft adjuster (1, 51) for an internal combustion engine, comprising a stator (5) which can be connected fixedly to a crankshaft so as to rotate with it, a rotor which is mounted in the stator (5) such that it can be rotated about a rotational axis, a sealing cover (7, 53) for minimizing leakage, and a spring element (9, 59) for positioning the rotor with respect to the stator (5), **characterized in that** the spring element (9, 59) is held on the sealing cover (7, 53) in the axial direction via a spring clip (3, 41).

2. Camshaft adjuster (1, 51) according to Claim 1, **characterized in that** the spring clip (3, 41) is oriented radially on the sealing cover (7, 53) and has axially extending limbs (13, 45) for fastening.

3. Camshaft adjuster (1, 51) according to Claim 1 or 2, **characterized in that** the sealing cover (7, 53) is configured with a number of recesses (15, 57) for fastening the spring clip (3, 41).

4. Camshaft adjuster (1, 51) according to Claim 2 or 3, **characterized in that** the limbs (13, 45) of the spring clip (3, 41) are latched in the or each recess (15, 57) of the sealing cover (7, 53).

5. Camshaft adjuster (1, 51) according to Claim 2 or 3, characterized in that- the limbs (13, 45) of the spring clip (3, 41) are braced in the or each recess (15, 57) of the sealing cover (7, 53).

6. Camshaft adjuster (1, 51) according to one of the preceding claims, **characterized in that** the spring element (9, 59) is configured as a helical spring, the windings (17) of which are engaged around at least partially by the spring clip (3, 41).

7. Camshaft adjuster (1, 51) according to one of the preceding claims, **characterized in that** the spring element (9, 59) is additionally held radially on the sealing cover (7, 53) by means of a spring holder (25).

## Revendications

1. Déphaseur d'arbre à cames (1, 51) pour un moteur à combustion interne, comprenant un stator (5) pouvant être connecté de manière solidaire en rotation à un vilebrequin, un rotor supporté de manière à pouvoir tourner dans le stator (5) autour d'un axe de rotation, un couvercle d'étanchéité (7, 53) pour minimiser les fuites ainsi qu'un élément de ressort (9, 59) pour le positionnement du rotor par rapport au stator (5),
**caractérisé en ce que**
l'élément de ressort (9, 59) est maintenu par le biais d'un étrier de ressort (3, 41) dans la direction axiale sur le couvercle d'étanchéité (7, 53).

2. Déphaseur d'arbre à cames (1, 51) selon la revendication 1,
**caractérisé en ce que**
l'étrier de ressort (3, 41) est orienté radialement sur le couvercle d'étanchéité (7, 53) et présente, pour la fixation, des branches s'étendant axialement (13, 45).

3. Déphaseur d'arbre à cames (1, 51) selon la revendication 1 ou 2,
**caractérisé en ce que**
le couvercle d'étanchéité (7, 53) est réalisé avec une pluralité d'évidements (15, 57) pour la fixation de l'étrier de ressort (3, 41).

4. Déphaseur d'arbre à cames (1, 51) selon la revendication 2 ou 3,
**caractérisé en ce que**
les branches (13, 45) de l'étrier de ressort (3, 41) sont encliquetées dans le ou dans chaque évidement (15, 57) du couvercle d'étanchéité (7, 53).

5. Déphaseur d'arbre à cames (1, 51) selon la revendication 2 ou 3,
**caractérisé en ce que**
les branches (13, 45) de l'étrier de ressort (3, 41) sont serrées dans le ou dans chaque évidement (15, 57) du couvercle d'étanchéité (7, 53).

6. Déphaseur d'arbre à cames (1, 51) selon l'une quelconque des revendications précédentes,
**caractérisé en ce que**
l'élément de ressort (9, 59) est réalisé sous forme de ressort spiral dont les spires (17) sont au moins en partie enserrées par l'étrier de ressort (3, 41).

7. Déphaseur d'arbre à cames (1, 51) selon l'une quelconque des revendications précédentes,
**caractérisé en ce que**
l'élément de ressort (9, 59) est en outre maintenu au moyen d'un dispositif de retenue de ressort (25) radialement sur le couvercle d'étanchéité (7, 53).
